# EUROPEAN PATENT APPLICATION

(11) **EP 3 620 996 A1**
(43) Date of publication of application: **11.03.2020**
(21) Application number: 18192498.6
(22) Date of filing: 04.09.2018
(51) Int. Cl.: G06N 20/00, G06N 7/00

(54) **TRANSFER LEARNING OF A MACHINE-LEARNING MODEL USING A HYPERPARAMETER RESPONSE MODEL**

(71) Applicant: Siemens Aktiengesellschaft, 80333 München (DE)
(72) Inventor: Geipel, Markus Michael, 80799 München (DE); Mittelstädt, Sebastian, 81541 München-Haidhausen (DE); von Beuningen, Anja, 80686 München (DE)

(57) **Abstract**

The invention relates to a method of building a machine-learning model (301-304) for operational monitoring of an ensemble (200) of field devices (201-204), the method comprising: performing a training (2001, 2012) of a first value of a hyperparameter (2053) of the machine-learning model (301-304) based on training data (603) of a first device of the ensemble (200); and, based on the training: obtaining a response model (2050) of the hyperparameter, the response model providing a mapping of a value of the hyperparameter to a performance indicator of the machine-learning model; and determining a second value of the hyperparameter for a second field device (201-204) of the ensemble (200) based on the response model (2050).

## Description

### TECHNICAL FIELD

Various examples of the invention generally relate to building machine-learning models for operational monitoring of an ensemble of field devices. Various examples specifically relate to transfer learning based on a response model of a hyperparameter of the machine-learning models.

### BACKGROUND

Machine learning is employed in various use cases. An example use case includes operational monitoring for industrial applications. Here, typically an ensemble of field devices is deployed (sometimes, each individual field device is referred to as asset and the ensemble is referred to as fleet). One or more operational states of the field devices are to be monitored using machine learning. For example, machine learning can be utilized for novelty detection or predictive maintenance of technical system. Failure modes can be recognized. Generally, a machine-learning model (MLM) can be used to recognize features or abnormalities in state data determined based on measurement data of one or more sensors of the field devices. An example of a MLM is a deep-learning (DL) MLM.

Building an MLM generally includes various tasks. For example, one or more hyperparameters of the MLM may have to be defined. Further, once the hyperparameters of the MLM have been set, the parameters of the MLM need to be defined. This is usually done using training and/or manual input from a domain expert.

It is generally required to build MLMs that adequately recognize features of the operation of individual field devices of the ensemble. Building MLMs for an ensemble field devices can be challenging, because individual field devices are often similar, but not the same. To give an example, gas turbines of a certain type are similar to each other, but different states of maintenance or geographical locations etc. can prevent simply using a single MLM for all gas turbines of the same type.

One approach is to individually build the MLMs for each individual field device. This can involve training of each individual MLM based on training data acquired for each individual field device. However, such an approach is, both, computationally expensive and labor intensive. Further, obtaining training data for a newly deployed field device can be time-consuming and may require a test phase to circumvent a so-called cold-start problem.

With respect to determining values of one or more hyperparameters, sometimes, a data scientist chooses the values of the one or more hyperparameters of a single MLM of a technical system according to her/his best knowledge. This can be based on experiences in previous projects, experiments or best practices proposed in the state-of-the-art literature. Typically, these choices are based on heuristics which are not proven to be optimal. Other approaches for optimizing values of one or more hyperparameters can rely on global optimization strategies such as grid search, a revolutionary algorithms, or meta learning based on Bayesian optimization. To do such manual configuration of the values of one or more hyperparameters for the MLMs of all field devices of an ensemble is again time consuming and error prone.

A further approach relies on transfer learning. For transfer learning, the general idea is to leverage all available training data and existing MLM(s) from the ensemble of field devices to build one or more further MLM(s) that can be used for operational monitoring of one or more field devices newly added to the ensemble. Transfer learning can be generally applied to, both, parameters and hyperparameters of the MLM.

Transfer learning can be associated with certain drawbacks and restrictions. Generally, the accuracy of an MLM built from conventional techniques of transfer learning can be limited. For example, certain tests data available for a first field device of the ensemble may not be appropriately describing the operation of a second field device of the ensemble.

### SUMMARY

Accordingly, there is a need for advanced techniques of building MLMs for operational monitoring of an ensemble of field devices. Specifically, there is a need for techniques which overcome or mitigate at least some of the above-identified drawbacks and limitations.

This need is met by the features of the independent claims. The features of the dependent claims define embodiments.

A method of building an MLM for operational monitoring of an ensemble of field devices includes performing a training of a first value of a hyperparameter of the MLM. This training is performed based on training data of a first device of the ensemble. The method also includes obtaining a response model of the hyperparameter based on the training. The response model provides a mapping of a value of the hyperparameter to a performance indicator of the machine-learning model. The method further includes determining a second value of the hyperparameter for a second field device of the ensemble, based on the response model.

In other words, the response model may thus map a configuration of the hyperparameter to the expected performance indicator. The response model gives the performance indicator as a function of the hyperparameter. The response model is a model - and hence - there may be some inaccuracies or approximations in the mapping between the value of the hyperparameter to the performance indicator. The actual performance indicator observed when implementing the MLM using the respective value of the hyperparameter may hence deviate to some larger or smaller degree from the performance indicator predicted by the response model.

A device is configured for building an MLM for operational monitoring of an ensemble of field devices. The device includes a control circuitry. The control circuitry is configured to perform a training of a first value of a hyperparameter of the MLM, based on training data of the first device of the ensemble. Then, the control circuitry is configured to obtain a response model of the hyperparameter. The response model provides a mapping of a value of the hyperparameter to a performance indicator of the machine-learning model. The control circuitry is further configured to determine a second value of the hyperparameter for a second field device of the ensemble based on the response model.

A computer program product or a computer program or a computer-readable storage medium includes program code. The program code can be executed by at least one processor. Executing the program code causes the at least one processor to perform a method of building an MLM for operational monitoring of an ensemble of field devices includes performing a training of a first value of a hyperparameter of the MLM. This training is performed based on training data of a first device of the ensemble. The method also includes obtaining a response model of the hyperparameter based on the training. The response model provides a mapping of a value of the hyperparameter to a performance indicator of the machine-learning model. The method further includes determining a second value of the hyperparameter for a second field device of the ensemble, based on the response model.

Based on MLMs that are built in accordance with these techniques, it is then possible to perform the operational monitoring of the ensemble of field devices. For this, state data may be received from the ensemble of field devices and processed using MLMs. Then, it would be possible to detect abnormal conditions or a certain operational states, based on an output of the MLMs.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

- FIG. 1: schematically illustrates an ensemble of field devices according to various examples, each field device being associated with the respective MLM facilitating operational monitoring of the respective field device.
- FIG. 2: schematically illustrates a device according to various examples.
- FIG. 3: is a flowchart of a method according to various examples.
- FIG. 4: schematically illustrates a workflow for building multiple MLMs using a response model of a hyperparameter according to various examples.
- FIG. 5: schematically illustrates aspects with respect to transfer learning using the response model of the hyperparameter according to various examples.
- FIG. 6: schematically illustrates aspects with respect to transfer learning using the response model of the hyperparameter according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various techniques described herein general relate to machine learning. Machine learning typically relies on a two-step approach: first, a training phase; and second, a prediction phase. In the training phase, values of one or more parameters of the MLM are set using training techniques and training data. In the prediction phase, the trained MLM operates on measurement data.

Example parameters of an MLM include: weights of neurons in a given layer of an artificial neural network (ANN) such as a convolutional neural network (CNN); kernel values of a kernel of a classifier; etc..

Building an MLM can include the training phase to determine the values of the parameters. Building an MLM can generally also include determining values of one or more hyperparameters. Typically, the values of one or more hyperparameters of the MLM are set and not altered during the training phase. Hence, the value of the hyperparameter can be altered in outer-loop iterations; while the value of the parameter of the MLM can be altered in inner-loop iterations. Sometimes, there can be multiple training phases, so that multiple values of the one or more hyperparameters can be tested or even optimized. The performance and accuracy of most MLMs are strongly dependent on the values of the hyperparameters.

Example hyperparameters include: number of layers in a convolutional neural network; kernel size of a classifier kernel; input neurons of an ANN; output neurons of an ANN; number of neurons per layer; learning rate; etc..

Various types and kinds of MLMs can be employed in the various examples described herein. For example, a novelty detector MLM / anomaly detector MLM, or a classifier MLM may be employed, e.g., a binary classifier. For example, a deep-learning (DL) MLM can be employed: here, features detected by the DL MLM may not be predefined, but rather may be set by the values of respective parameters of the model that can be learned during training.

As a general rule, various techniques can be employed for building the MLM. For example, typically, the type of the training can vary with the type of the MLM. Since the type of the MLMs can vary in different implementations, likewise, the type of the employed training can vary in different implementations. For example, an iterative optimization could be used that uses an optimization function that is defined with respect to one or more error signals.

Various techniques described hereinafter relate to operational monitoring of an ensemble of field devices. As a general rule, the techniques described herein can be applied to various kinds and types of field devices, in particular in an industrial environment. To give a few examples, the ensemble of field devices may relate to a fleet of gas turbines, pumps such as submersible pumps, or compressors. The ensemble of field devices may relate to a fleet of sensors monitoring a certain physical observable. For example, the ensemble of field devices may relate to multiple axle counters distributed across a railway network.

Various techniques described herein facilitate building one or more MLMs that facilitate accurate operational monitoring of the field devices of the ensemble. Specifically, various techniques described herein facilitate building the one or more MLMs in a computationally inexpensive and labor efficient manner. At the same time, various techniques described herein facilitate building the one or more MLMs at a significant accuracy. A cold-start problem can be avoided by using various techniques as described herein.

Various techniques hence facilitate efficiently integrating new field devices into an ensemble or extending an existing ensemble by adding new field devices. Various techniques facilitate provisioning of one or more MLMs that accurately interpret state signals of any field device in the ensemble in case of context changes and/or environmental changes across the ensemble, and/or in view of aging. Thereby, availability of the operational monitoring, quality and production gains can be achieved.

Specifically, various techniques described herein facilitate re-using information obtained from one or more first field devices of the ensemble for building an MLM that can be used for monitoring operation of one or more second field devices of the ensemble. By such reuse of information, it becomes possible to reduce the computational complexity and avoid the cold-start problem.

Such techniques may be generally referred to as transfer learning. As a general rule, various information may be subject to the transfer learning. For example, models from similar field devices may be transferred and then fine-tuned for the MLM of a new fleet device. For example, a hierarchical structure may be used. Here, an MLM may be split into a common model part that is reused across the ensemble; and an add-on model part that is used to capture the residuals to adjust for the ideosyncrasies of the individual field device. In various examples described herein, one or more hyperparameters can be subject to the transfer learning. Missing training data for a given field device can be compensated by training data available for a similar field device.

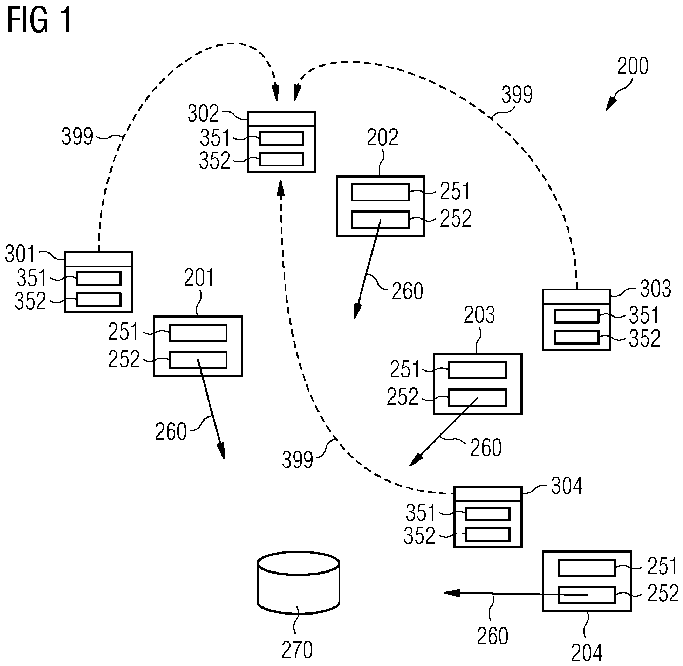

FIG. 1 schematically illustrates aspects with respect to an ensemble 200 of field devices 201-204. In the scenario of FIG. 1, the various field devices 201-204 of the ensemble 200 are deployed at different sites. They are, hence, subject to different environmental conditions. Depending on the particular field device 201-204, the maintenance state may vary. For example, different field devices 201-204 may operate based on different firmware, e.g., different firmware versions.

On the other hand, the various field devices 201-204 may be comparable with each other. For example, they may be of the same type or make. For example, the various field devices 201-204 could be all pumps of the same kind.

In the scenario of FIG. 1, the field devices 201-204 all include a respective sensor 251. Each sensor 251 is configured to acquire measurement data that is indicative of an operational state of the respective field device 201-204. For example, in case the field devices 201-204 are pumps, it would be possible that the sensors 251 measure vibrations or rounds per minute of the respective pumps. It would be possible that the temperature of the pumps is monitored. As will be appreciated, there is a wide variety of physical observables that could be monitored. In that sense, it is possible that each field device 201-204 includes multiple sensors.

In FIG. 1, the field devices 201-204 also include communication interfaces 252. The field devices 201-204 are configured to output state data 260 via the interfaces 252. The state data 260 enables the operational monitoring of the field devices 201-204. The field devices 201-204 can determine the state data 260 based on measurement data obtained from the sensors 251. The state data 260 can be a fingerprint of the operational state of the respective field device 201-204. For instance, it would be possible that the state data 260 includes a time series of the measurement data acquired by the respective sensor 251.

In the scenario FIG. 1, the state data 260 is written to the database 270. Thereby, fleet management of the various field devices 201-204 can be implemented, by accessing the database 270 that includes the state data 260 for the ensemble 200.

Also illustrated in FIG. 1 are aspects with respect to MLMs 301-304. In the example of FIG. 1, each one of the field devices 201-204 is associated with the respective MLM 301-304. Then, for operational monitoring of the field device 202, the respectively associated MLM 301 is used to interpret the state data 260, i.e. to recognize features in the state data 260.

For example, it would be possible to detect anomalies in the state data 260, using a novelty detector as MLM. Then, irregularities in the operation - such as wear-out or damages - can be detected. Maintenance can then be triggered. Also, it would be possible to detect certain features in the state data 260, using a classifier. Thereby, the current operational state of each individual field device 201-204 can be classified within a set of classes. For example, normal operation, critical operation or breakdown could be example classes that are detected from corresponding features included in the state data 260, using the MLMs 301-304.

In the example of FIG. 1, each MLM 301-304 is tailored to the associated field device 201-204. For example, the MLM 301 may be characterized by a first value of a hyperparameter 351; while the MLM 302 may be characterized by a second value of the same hyperparameter 351, the second value being different from the first value. Alternatively or additionally, the MLM 301 may be characterized by a first value of a parameter 352; while the MLM 302 may be characterized by a second value of the same parameter 352, the second value of the parameter 352 being different from the first value of the parameter 352. By provisioning multiple MLMs 301-304, each individual MLM 301-304 may be tailored to the respective field device 201-204. This facilitates a generally more accurate operational monitoring.

According to various examples, techniques of transfer learning are used to build one or more MLMs that enable interpretation of the state data 260 of the field devices 201-204 of the ensemble 200. As illustrated in FIG. 1, this can include using information 399 obtained for the MLMs 301, 303-304 for building the MLM 302. Generally speaking, similarities between the field devices 201-204 can be used in order to obtain one or more MLMs that appropriately describe the state data 260 of the field devices 201-204 of the ensemble 200 in a fast and efficient, yet accurate manner.

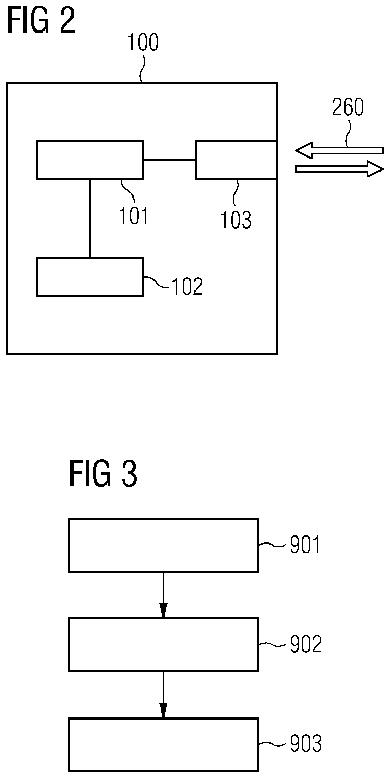

FIG. 2 schematically illustrates aspects with respect to a device 100 that can be configured to execute such an operational monitoring of the ensemble 200 of field devices. The device 100 includes a processor 101 and a memory 102. The processor 101 can load program code from the memory 102 and execute the loaded program code. Then, the processor 101 can perform techniques as described herein with respect to transfer learning; building a MLM for one or more field devices of an ensemble of field devices; operational monitoring of the ensemble of field devices based on the MLMs; etc. The processor 101 and the memory 102 hence implement a control circuitry.

The device 100 includes a communication interface 103. For example, the device 100 may receive the state data 260 via the interface 103, e.g., directly from the field devices 201-204 or from the database 270. It would also be possible that the device 100 accesses the database 270 for reading and/or writing values of the hyperparameters 351 or values of the parameters 352, to facilitate the transfer learning 399.

FIG. 3 is a flowchart of a method according to various examples. The method of FIG. 3 facilitates building of an MLM for operational monitoring of an ensemble of field devices, e.g., of the ensemble 200 of field devices 201-204 according to FIG. 1. For example, the method of FIG. 3 could be executed by the control circuitry 101, 102 of the device 100 of FIG. 2.

The techniques of FIG. 3 facilitate automatically building optimized MLMs for an ensemble of field devices. Specifically, techniques are described which rely on optimizing values of one or more hyperparameters of the MLM of a first field device and transferring knowledge about these values of the one or more hyperparameters to the MLMs of similar second field devices.

In further detail, the values of one or more hyperparameters of the MLM are trained, e.g., using an optimization (sometimes referred to as meta-trainer in contrast to training of values of parameters of the MLM). Thereby, a response model of the one or more hyperparameters is obtained. The response model of a given hyperparameter is a mapping of the value of this hyperparameter to a performance indicator (KPI), such as model accuracy or mean squared prediction error of a classification result. The response model hence may comprise a functional dependency of the KPI - specifically, an expected KPI - on the value of the hyperparameter. This functional dependency is obtained from the meta-training. For an example concrete implementation, the optimization can rely on Bayesian Optimization with Gaussian Processes as response model.

Generally, KPI can be anticipated by the response model. In other words, the response model can be used to predict the KPI, if a certain value of the hyperparameter is used. Thereby, it becomes possible to predict the performance of the MLM in view of the configuration of the hyperparameter.

In further detail, at block 901, the meta-training of a first value of a hyperparameter of the MLM is performed. This is based on training data of a first field device of the ensemble. Thereby, the MLM associated with the first field device is defined with respect to the hyperparameter.

Next, at block 902, the response model of the hyperparameter is obtained. This response model describes the KPI of the MLM as a function of a value of the hyperparameter. In other words, the response model provides a mapping of a value of the hyperparameter to a performance indicator of the machine-learning model. The respective functional dependency is obtained from the training of block 901. The response model of the hyperparameter is obtained based on the training of the first value of the hyperparameter. As such, blocks 901 and 902 may be performed together or in parallel.

At block 903, a second value of the hyperparameter is determined for a second field device of the ensemble, based on the response model. Thereby, the MLM associated with the second field device is defined with respect to the hyperparameter.

For example, as part of block 903, it would be possible to perform a further meta-training of the second value of the hyperparameter based on further training data of the second field device. In this regard, the response model can be used as a priori knowledge for the further training. This would correspond to a transfer of the response model from the meta-training of the first field device to the meta-training of the second field device.

Notwithstanding the above, as a general rule, there are various options available how the response model can be used for the further meta-training. For example, the response model can serve as a prior for the further meta-training. Thus, the further meta-training may build up a further response model; wherever the further response model is not (yet) accurately determined, the further meta-training may use the response model as a fallback assumption for the further response model. For example, the further response model may be initialized based on the response model.

Generally speaking, the meta-training of the first value and the further meta-training of the second value can be configured alike; i.e., similar meta-training techniques may be employed for the various MLMs. Because the further meta-training can use the a priori knowledge in the form of the response model, the further meta-training of the second value can be less computationally expensive than the initial meta-training of the first value.

For example, it would be possible that the meta-training and the further meta-training are performed using an optimization comprising multiple outer-loop iterations. Here, the respective one of the first value and the second value of the hyperparameter are adjusted between two outer-loop iterations. On the other hand, each outer-loop iteration can comprise multiple inner-loop iterations, wherein a value of a parameter of the MLM is adjusted between two inner-loop iterations; i.e., the inner-loop iterations can correspond to a training of the value of the parameter. The count of the outer-loop iterations of the training can be larger by at least a factor of 10 than a further count of the outer-loop iterations of the further training. This is because the further training can benefit from the a priori knowledge and form of the response model.

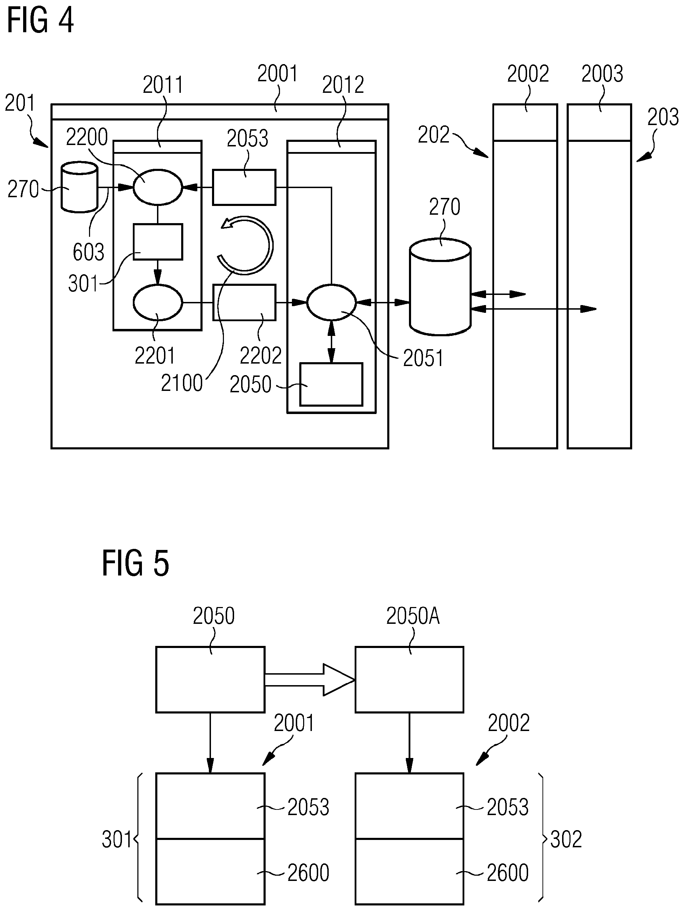

FIG. 4 illustrates aspects with respect to transfer learning using a response model of the hyperparameter. A model builder 2001 of the MLM 301 of the field device 201 is illustrated. The model builder 2001 includes a meta-training 2012 to determine a value of a hyperparameter 2053 of the MLM 301. The model builder 2001 also includes a parameter training 2011 to determine a value of a parameter of the MLM 301.

The meta-training 2012 iteratively suggests (in outer-loop iterations 2100) new values for the hyperparameter 2053 the MLM 301 shall be trained and evaluated within the parameter training 2011. A respective model trainer 2200 receives this input and performs, e.g., backpropagation or the like. The model trainer 2200 can perform multiple inner-loop iterations (not illustrated in FIG. 4). The model trainer 2200 also uses training data 603 obtained from the database 270, e.g., labeled state data 260.

The output of the model trainer 2200 defines the MLM 301: here, the value of the hyperparameter 2053 and the value of the parameter are set. The MLM 301 can then be evaluated by an evaluator 2201, e.g., to determine one or more KIPs. Based on the evaluation result 2202 and optionally some prior knowledge - e.g., domain knowledge or knowledge about the optimal models of similar assets -, the meta-training 2012 determines the response model 2050. This response model 2050 can be used by an optimizer 2051 to determine the next value of the hyperparameter 2053, i.e., for the next outer-loop iteration 2100. The outer-loop iterations 2100 can be stopped at any time and the so far best value 2053 of the hyperparameter is chosen for the MLM 301.

The response model 2050 of the hyperparameter 2053 determined in the model builder 2001 of the MLM 301 of the field device 201 is then stored in the database 270.

For the MLMs 301, 302 of other, similar field device 202, 203 to be built, the already determined response models 2050 can be used as prior knowledge to the respective meta-training 2012 in the model builder 2002, 2003.

As a general rule, there are various options available for transferring the prior knowledge of the response model 2050 of the hyperparameter to the training of one or more further MLMs.

A first example is illustrated in FIG. 5. Here, the response model 2050 obtained from the model builder 2001 of the MLM 301 is used as prior for the further response model 2050A of the used for the model builder of the model 302 of the field device 202 (which is characterized by the value of the hyperparameter 2053 and the value of a parameter 2600 of the MLM 302). For example, in Bayesian Optimization the response model can be described by a stochastic process, which is mainly determined by a kernel function. This kernel function can be assumed to be the prior of the further response model 2050A.

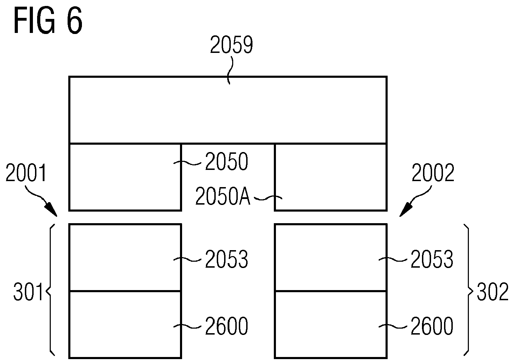

A second example is illustrated in FIG. 6. The response model of the hyperparameter 2053 response itself needs one or more hyperparameters 2059 (response-model hyperparameters 2059), which can directly be transferred from one MLM 301 to another MLM 302, as illustrated in FIG. 6.

For example, assuming the response models 2050, 2050A are described by a stochastic process that is utilized by a kernel function. The kernel function can be used to describe a similarity between two values of the hyperparameter 2053. The kernel function itself includes hyperparameters 2059 that are optimized during the outer-loop iterations 2100. The optimized values of the one or more response-model hyperparameters 2059 of the response model 2050 can serve as initialization values of the one or more response-model hyperparameters 2059 of the response model 2050A.

Hence, generally, the response model 2050 can be defined by a first value of the response-model hyperparameter 2059 that is obtained from the meta-training 2012 of the model builder 2001 of the respective model 301. Then, a further meta-training of a further model builder 2002 can be performed for the second value of the hyperparameter 2053 based on the further response model 2050A - which is defined by a second value of the response-model hyperparameter 2059. Here, the second value of the response-model hyperparameter 2059 can be obtained from the first value of the response-model hyperparameter 2059.

Summarizing, above techniques have been described which enable determining the optimal values of one or more hyperparameters of an MLM for monitoring the operational state of a field device, such as pumps or gas turbines. The value of the hyperparameter can be trained - e.g., using an optimization. Once the value of the hyperparameter has been trained, the knowledge about the optimal value of hyperparameter can be stored in a database and transferred to MLMs of similar field devices. This transfer can be implemented in various manners, e.g., by utilizing the response model itself as the further response model of hyperparameter of the MLM of the similar field device; or by transferring the optimal response-model hyperparameters or prior knowledge about the response-model hyperparameter.

By such techniques, an optimal choice of the values of one or more hyperparameters of MLMs for technical systems is able to increase the performance and accuracy of the MLMs. For example, in novelty detection or classification, an optimal set of hyperparameters is able to decrease the number of false positive alarms and to increase the true positive rate. In addition, if novelty detection is for example used to predict failures of field devices such as pumps, the time between failures are predicted and the pump actually fails can be reduced. In addition the training time of the MLM can be reduced significantly.

By such techniques, it becomes possible to optimize the MLMs of an entire fleet/ensemble of similar assets/field devices, such as a set of pumps of the same type in the same oilfield, but with different maintenance status. For this, a separate MLMs used per field device. On the other hand, the training time for all MLMs of the ensemble can be accelerated by transferring prior knowledge between similar field devices. The higher accuracy and fast training of the MLMs helps to improve freshness of the MLMs and avoids the cold-start problem. According to the various examples described herein, it may not be required to heavily rely on a domain expert for performing a training of the various MLMs.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

## Claims

1. A method of building a machine-learning model (301-304) for operational monitoring of an ensemble (200) of field devices (201-204), the method comprising:
- performing a training (2001, 2012) of a first value of a hyperparameter (2053) of the machine-learning model (301-304) based on training data (603) of a first device of the ensemble (200),
- based on the training: obtaining a response model (2050) of the hyperparameter, the response model providing a mapping of a value of the hyperparameter to a performance indicator of the machine-learning model, and
- determining a second value of the hyperparameter for a second field device (201-204) of the ensemble (200) based on the response model (2050).

2. The method of claim 1, further comprising:
- performing a further training of the second value of the hyperparameter (2053) based on further training data (603) of the second field device (201-204) using the response model (2050) as a priori knowledge for the further training.

3. The method of claim 2,
wherein the training and the further training are performed using an optimization comprising multiple outer-loop iterations (2100), the respective one of the first value and the second value of the hyperparameter being adjusted between two outer-loop iterations (2100),
wherein each outer-loop iteration comprises multiple inner-loop iterations, wherein a value of a parameter of the machine-learning model (301-304) is adjusted between two inner-loop iterations.

4. The method of claim 3,
wherein a count of the outer-loop iterations (2100) of the training is larger by at least a factor 10 than a further count of the outer-loop iterations (2100) of the further training.

5. The method of any one of the preceding claims, further comprising:
- performing a further training of the second value of the hyperparameter based on further training data (603) of the second field device (201-204) and a further response model (2050A) (2050A) of the hyperparameter,
wherein the response model (2050) is used as a prior for the further response model (2050A).

6. The method of claim 5,
wherein the further response model (2050A) is initialized based on the response model (2050).

7. The method of any one of the preceding claims,
wherein the response model (2050) is defined by a first value of a response-model hyperparameter (2059),
wherein the first value of the response-model hyperparameter (2059) is obtained from the training,
wherein the method further comprises:
- performing a further training of the second value of the hyperparameter based on further training data (603) of the second field device (201-204) and a further response model (2050A) of the hyperparameter, the further response model (2050A) being defined by a second value of the response-model hyperparameter, and
- obtaining the second value of the response-model hyperparameter based on the first value of the response-model hyperparameter (2059).

8. The method of claim 7,
wherein the response-model hyperparameter (2059) comprises a kernel function of a stochastic process to determine a similarity measure between two values of the hyperparameter.

9. The method of any one of the preceding claims,
wherein the response model (2050) comprises a functional dependency of the value of the hyperparameter on the performance indicator,
wherein the one or more values of the functional dependency are obtained based on the training.

10. The method of any one of the preceding claims,
wherein the ensemble (200) of field devices (201-204) comprises field devices (201-204) of the same device type at multiple sites.

11. A device (100) configured for building a machine-learning model (301-304) for operational monitoring of an ensemble (200) of field devices (201-204) includes a control circuitry (101, 102), the control circuitry (101, 102) is configured to:
- perform a training (2001, 2012) of a first value of a hyperparameter (2053) of the machine-learning model (301-304) based on training data (603) of a first device of the ensemble (200),
- based on the training: obtain a response model (2050) of the hyperparameter, the response model providing a mapping of a value of the hyperparameter to a performance indicator of the machine-learning model, and
- determine a second value of the hyperparameter for a second field device (201-204) of the ensemble (200) based on the response model (2050).

12. The device (100) of claim 11,
wherein the control circuitry (101, 102) is configured to perform the method of any one of claims 1 to 10.
